Europäisches Patentamt

European Patent Office

Office européen des brevets

(19)

(11) Publication number: **0 169 654**
**A2**

(12)    **EUROPEAN PATENT APPLICATION**

(21) Application number: **85304293.5**

(22) Date of filing: **14.06.85**

(51) Int. Cl.⁴: **B 32 B 27/00**
**B 01 J 2/00**

(30) Priority: **15.06.84 US 621179**

(43) Date of publication of application:
**29.01.86 Bulletin 86/5**

(84) Designated Contracting States:
**BE DE FR GB IT NL SE**

(71) Applicant: **Exxon Research and Engineering Company**
**P.O.Box 390 180 Park Avenue**
**Florham Park New Jersey 07932(US)**

(72) Inventor: **Kresge, Edward Nathan**
**68 Parlin Lane**
**Watchung New Jersey(US)**

(72) Inventor: **Hazelton, Donald Ross**
**89 Glenmere Drive**
**Chatham New Jersey(US)**

(74) Representative: **Dew, Melvyn John et al,**
**Esso Chemical Ltd. Esso Chemical Research Centre P.O.**
**Box 1**
**Abingdon Oxfordshire, OX13 6BB(GB)**

(54) **Coated pellets and film compositions.**

(57) A first polymer e.g. elastomer is coated with a second polymer e.g. plastic polymer, by (1) selecting as the second polymer a polymer which has a crystalline or semicrystalline melting point which is at least 10°C above the melting or softening point of the first polymer, the two polymers being insoluble in one another in the melt state; (2) intimately blending the two polymers; and (3) extruding the blend through a die having an outlet die face which is maintained at a substantially lower temperature than the extruder melt temperature.

EP 0 169 654 A2

Croydon Printing Company Ltd.

# COATED PELLETS AND FILM COMPOSITIONS

Many elastomers are tacky or exhibit cold flow in their green or uncured state. As a consequence, these materials cannot be transported in bulk as free flowing pellets but must be shipped in bales. This practice requires that the ultimate elastomer processor must be equipped to cut up or mill the bales. The necessary equipment is generally large scale, expensive equipment. Additionally, the bales cannot be readily preblended with other materials. The necessity for baling results in high handling and shipping costs. In order to facilitate handling and processing of elastomers, it has been considered desirable to produce elastomer pellets. Generally, however, elastomer pellets exhibit "blocking" or cold flow characteristics which result in solidification into a solid mass after a short storage time, especially at warm temperatures.

Numerous attempts have been made to formulate elastomeric pellets which will remain free flowing until they are to be processed. Dusting the elastomeric pellets with inorganic materials, e.g., clay, talc, etc., has been found to extend the time over which the pellets are free flowing. Improved results have been achieved by dusting a coating with selected organic materials, such as hydrocarbon waxes (British Patent 901,664) or powdered polyethylenes and polypropylenes (British Patent 928,120). However, because of the discontinuity of the dust coat, the coated pellets eventually flow together to form a solid mass.

By blending the elastomer with a crystalline type polymer such as polyethylene, polypropylene or copolymers of ethylene and propylene, it has been possible to produce free flowing elastomer containing pellets. However, the elastomer content of the pellet must be less than about 65%. The product is, of course, not suitable for use in all elastomer applications.

Another coating approach to the problem has been the coating of elastomer pellets with emulsions containing a tack free coating material. Coating is accomplished either by dipping pellets into the emulsion or spraying the emulsion onto the pellets. In either case the emulsion coating must be dried, and where the emulsion contains a solvent the solvent must be recovered. Drying and solvent recovery requirements result in increased costs.

Melt-coating methods for producing free-flowing elastomer pellets have also been suggested. According to U.S. 3,669,722, to Bishop, coating can be accomplished by using a die, similar to wire coating die, into which a strand of rubber to be coated is fed simultaneous with melt coating material. A continuous melt coated strand of rubber issues from the coextrusion die outlet, is cooled in a liquid cooling bath, and is subsequently pelletized. This melt-coating method not only adds significantly to rubber manufacturing costs, but has limitations from the standpoint of efficiently producing large quantities of coated pellets.

Pellets of rubber have been coated with variou coating materials by heating the rubber pellet to a temperature which is higher than the melting point of the coating material, and then contacting the heated pellet with the coating material which is preferably in the form of a fine powder. The heated pellet fluxes the coating material on the surface of the pellet to form a substantially continuous coating. The hot coated pellet is then cooled.

A study of bicomponent mixtures has shown that upon extrusion of the mixtures, stratification will occur. See Soulborn, J.H. and Ballman, R.L.; "Stratified Bicomponent Flow of Polymer Melts in a Tube", Applied Polymer Science, No. 20, 175-189 (1973). The authors attribute stratification to differences in the melt viscosity of the components.

What is required by the art is a commercially viable method of producing a free-flowing rubber pellet which contains a major portion of rubber. To be commercially viable, the process for producing the free-flowing pellets must be readily adapted to conventional rubber pelletizing techniques.

It has surprisingly been found that a rubber pellet composition comprising an elastomer and plastic insoluble in the elastomer can be caused to coat itself with a plastic skin by control of composition, extrusion conditions and die temperature. The elastomer-plastic blend is extruded at a temperature above the melting point of the plastic, and pelletized as it exits from a die, the die having a temperature gradient across the die from inlet to outlet, the gradient being such that the die outlet temperature is substantially lower than the extrusion melt temperature (die inlet temperature). The resultant product is a pellet coated with a skin of plastic.

Brief Description of the Drawings

Figure 1A - Scanning Electron Microscope (SEM) micrograph of strand-cut pellet sections microtomed at liquid nitrogen temperatures.

Figure 1B - SEM micrograph of under-water pelletized pellet sections microtomed at liquid nitrogen temperature.

Figure 2A - SEM of surface of strand-cut pellet section microtomed at liquid nitrogen temperatures showing rubber extracted from the surface.

Figure 2B - SEM of surface of under-water pelletized pellet section microtomed at liquid nitrogen temperatures showing continuous thermoplastic skin with no rubber extracted.

This invention relates to a method for preparing a free flowing elastomer pellet. More particularly, it relates to a method for preparing an elastomer pellet which is free-flowing by virtue of the fact that it is encased in a skin comprising a solid plastic material.

In the practice of this invention, an elastomer is blended with a semi-crystalline or crystalline plastic material which has a melting point of a least $10^{\circ}C$ higher than the softening point of the elastomer, preferably at least about $15^{\circ}C$ higher than the softening point of the elastomer, preferably at least $30^{\circ}C$ higher, more preferably at least $40^{\circ}C$ higher. The elastomer/plastic blend is then extruded through a die in which the die outlet is maintained at least $10^{\circ}C$ below the melting point of the plastic in order to develop a temperature gradient across the die from the die inlet which should be above the melting point of the plastic to the die outlet, wherein the die outet temperature should be preferably at least $20^{\circ}C$, more preferably at least about $30^{\circ}C$ below the melting point of the plastic.

Not wishing to be bound by theory, it is believed that as the melt temperature is reduced across the die, the difference in viscosity between the elastomer and the plastic is increased thereby causing stratification in a manner so as to cause the plastic to be concentrated along the surface of the die orifice while the central core becomes elastomer rich. Shear plays an important part in the stratification process as does the wall effect because of their effect on the velocity of the two components of the melt, and hence, the composition differences throughout the melt existing the die. The melting point of the polymer is a function of shear and pressure, and is higher in the dynamic system of an extruder die than the static melting point of the polymer. As used in the specification and claims, "melting point" will mean the normal static melting point or softening point of the polymer.

The elastomer/plastic polymer composition is extruded through a multi-orificed strand die in the aforedescribed manner and pelletized either by use of a strand pelletizer or by using a die face pelletizer. In one embodiment a conventional strand die is modified by

having the die outlet plate cored so that it can be water cooled. In a preferred embodiment, the die cooling is accomplished by using an underwater pelletizer. Typical of these underwater pelletizers is the Mini Underwater Pelletizer (MUP) manufactured by Gala Industries, Inc., Eagle Rock, Virginia, U.S.A.

Since the stratification process by which a pellet coated with a skin of plactic is formed requires a finite time, the length/diameter (L/D) ratio of the die outlet holes is an important criterion in carrying out out the process of this invention. The L/D ratio can be about 2 to about 20, preferably about 3 to about 10, e.g., about 3.5 to about 8. The die outlets through which strands of elastomer/plastic blends are extruded can be converging tubular outlets which have a larger diameter inlet than outlet. In that event, the L/D ratio is based on an average outlet diameter over the length of the channel.

The length of the outlet channel can be about 2.5 cm to about 10 cm, preferably about 3.8 to about 8.9 cm, more preferably about 5.0 to about 7.6 cm, e.g., about 6.4 cm. The diameter of the die outlet orifice can be about 0.13 to about 0.51 cm, preferably about 0.19 to about 0.38 cm, e.g., about 0.32 cm.

A critical parameter in carrying out the process of this invention is the temperature gradient across the die from the inlet to the outlet. While no particular temperature gradient is required, at some point within the die the melt temperature must be reduced to a temperature which is preferably at about the melting point of the plastic in order to insure that there is a significant difference between the viscosity of the plastic melt and the viscosity of the elastomer melt. It is not essential that the melt temperature of the composition be below that of the plastic melt point. In a preferred embodiment, however, the melt temperature of the composition is reduced to a temperature which is below the melting point of the plastic component. In the preferred method of carrying out the process of this invention, an underwater pelletizer is used and the temperature gradient across the die is created by cooling the face of the die.

The maximum temperature differential across the die is achieved by operating at or about the plugging temperature of the system. The "plugging temperature" is that temperature at which some of the die outlet orifices begin to be plugged by solidified polymer. Some plugging of a multi-orifice die can be tolerated up to the point where flow rate is decreased below economical rates. Generally, the outer outlet holes in the die will plug first. A multi-orifice die will have twenty or more outlet holes, e.g., 50-100. It is possible to operate the die at the plugging temperature with as much as about 20-30% of the holes plugged.

The plugging temperature is determined by gradually cooling the die or die face to the point where outlet hole plugging begins to occur. Operation at the plugging temperature achieves the maximum stratification and plastic skin development in the elastomer pellet.

Where an underwater pelletizer is used, the cooling water temperature will be about 20°C to about 50°C. The "extruder melt temperature" (the die inlet melt temperature) will be about 160°C to about 250°C and will depend on the elastomer and plastic selected. The appropriate extruder melt temperature for various plastic/elastomer compositions is known to those skilled in the extrusion art.

The process of this invention is particularly suited to those elastomers which are tacky in their solid state or exhibit cold flow. Illustrative examples of the elastomers to which this invention may be applied are high molecular weight elastomers having a Tg (glass Transition Temperature) of less than 0°C, e.g. ethylene-propylene rubber (EPR), terpolymers of ethylene, propylene and a non-conjugated diene (EPDM), natural rubber (NR), polyisobutylene (PIB), butyl rubber, halogenated butyl rubber, acrylonitrile-butadiene rubber (NBR) and styrene-butadiene rubber (SBR).

The plastics which may be utilized in the practice of this invention have a crystalline melting point of at least 70°C. Illustrative of those plastic polymers are high density polyethylene (HDPE), low density polyethylene (LDPE), polypropylene (PP), linear low density polyethylene (LLDPE), syndiotactic polybutadiene resin (SBD), polybutene-1 and crystalline copolymers of ethylene and other alpha-olefins. The plastic and elastomer must be insoluble in one another in the melt state.

The elastomer-plastic polymer composition of this invention can comprise about 15 to about 90 weight percent plastic polymer, e.g., about 20 to about 80 weight percent. Where the product desired is an elastomeric product, the plastic polymer comprises about 15 to about 35 weight percent of the composition; preferably about 15 to about 30 weight percent, most preferably about 20 to about 28 weight percent, e.g., about 25 wt.%.

The plastic and polymer may be blended in any conventional manner and fed to an extruder. For example, an elastomer bale can be shredded and blended with plastic polymer powder in a ribbon blender and subsequently fed to an extruder. Preferably a mixing extruder, e.g., twin screw extruder is used for the extrusion to insure complete mixing of the elastomer and plastic. The mixture is extruded out of a conventional multi-orificed die in which the die face is maintained at a temperature of at least about 10°C below the melting point of the plastic polymer. Preferably the die face is maintained at a temperature at least about 10°C below the melting point of the plastic polymer; more preferably at least about 20°C; most preferably at least about 30°C below the melting point of the plastic. Of course, in view of the high melt temperature of the polymers the entire die plate cannot be maintained at a single temperature, and there will be a temperature

gradient across the die from its internal inlet surface to its outer face at the outlet of the die.

To demonstrate the effectiveness of the instant invention, an elastomer-plastic polymer composition having the formulation shown in Table I was extruded through a conventional multi-orificed strand die and cooled by passing the polymer strands through a water bath. Subsequently, the strands were pelletized. Additionally the same formulation was pelletized using an underwater pelletizer.

The underwater cut pellets had a plastic skin, a lower coefficient of friction and were more free flowing than the conventional strand pelletized material. Table II compares the coefficient of friction of the two products, and Table III shows the pressure/strength ratio for the compositions. The pressure/strength ratio is the ratio of the consolidation pressure to yield strength under the shear required to create pellet flow. A higher ratio is indicative of a more free flowing pellet.

## TABLE I

### Elastomer/Plastic Composition

Elastomer[1]: 40% by weight

Plastic Polymers
    HDPE[2] 16% by weight
    Polypropylene[3] 44% by weight

1.  An ethylene propylene copolymer containing 43% ethylene, having a glass transition temperature of 55°C, and having a mooney viscosity of 25 (1+8 at 127°C).

2.  AB 55-100; a 10 melt index HDPE polymer, sold by Allied Corporation.

3.  An isotactic polypropylene reactor copolymer of propylene and ethylene having a crystalline melt temperature of 160°C.

## TABLE II

| Process | Wall Friction Angle | (Degrees) |
|---|---|---|
| | Stainless Steel | Aged Carbon Steel |
| A  Conventional strand cut | 22 | 22 |
| B  Underwater cut (skin) | 13 | 18 |

## TABLE III

| Process | Consolidating Pressure (KPa) | Yield Strength Kg/m² | Pressure/ Strength ratio |
|---|---|---|---|
| A | 2662 | 552 | 4.82 |
| B | 1875 | 74 | 25.3 |

In preparing the underwater die cut pellets of this invention, the MUP (Mini Underwater Pelletizer) was operated with an extruder melt temperature of 209°C, an extruder pressure of 11,030 kPa and cooling water temperature of 41°C. The extruder output rate was 57 Kg/hr.

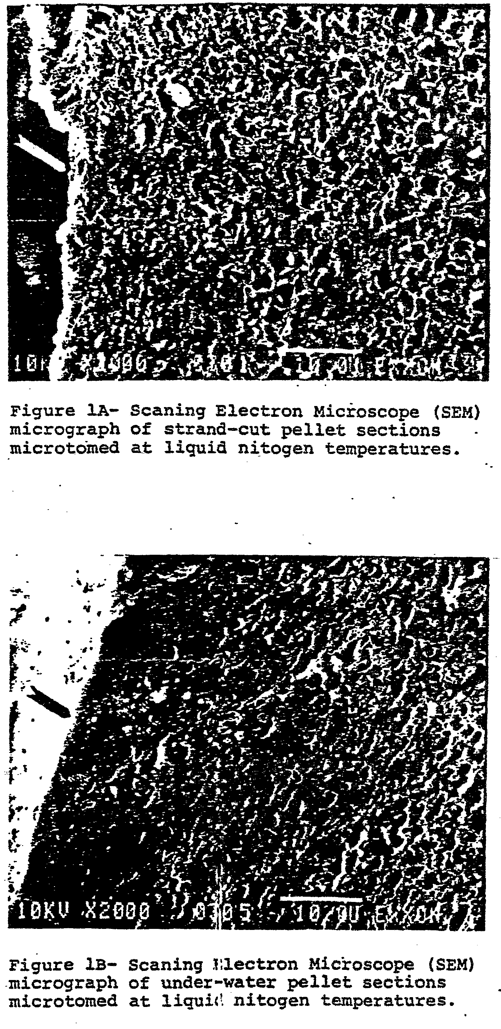

It is evident from the above data that pellets made according to the process of this invention are more free flowing than strand pelletized material even where the compositions are identical. Figure 1A and B are SEM micrograph comparisons of the strand formed pellets (Fig.1A) and the underwater cut pellets (Fig.1B). The rubber phase of the composition was extracted with hexane. As can be seen from the micrograph of Fig. 1B, the product produced according to the process of this invention has a skin which is substantially all plastic polymer while the pelletized strands are essentially of uniform composition throughout.

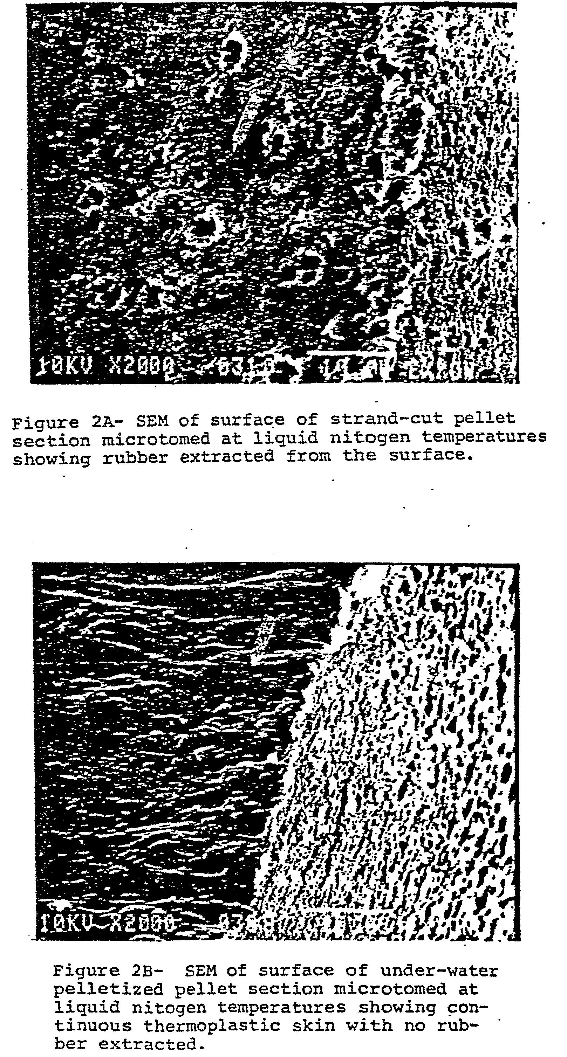

In order to demonstrate that the skin of the pellets of this invention are substantially all plastic polymer, the pellets were treated with hexane to extract the rubber phase. A comparison of Figures 2A and 2B show that rubber was extracted from the surface of the conventional strand pelletized material, whereas substantially no rubber was extracted from the skin of the pellets prepared according to the process of this invention.

While the invention has been described in terms of a process for manufacturing an elastomer pellet. having a plastic polymer skin, it will be evident from the foregoing disclosure that the process has other applications. In particular, it can be utilized to prepare polymer film comprising a laminate of one polymeric material over another. Alternatively, it may be utilized to prepare a sandwich of one polymer material on each face of a second polymer material.

The criteria for the manufacture of such films is that a first polymer must be insoluble in a second polymer in the melt state, and that the polymers have softening or melt points which are separated from one another by at least $10^{\circ}C$; preferably at least about $30^{\circ}C$; more preferably at least about $40^{\circ}C$. The polymer, which is intended to produce the "skin" of the composite, must have the higher melting point.

With respect to the description of the invention relating to free-flowing pellets, the core of the pellet is generally an elastomer. The second polymer of the film composition need not be an elastomer so long as the foregoing criteria are met.

The film may be produced using conventional film forming techniques, e.g., blown, cast or tubular water bath methods. However, in order to form the "skin" on at least one surface of the composite, a die surface must be cooled in the aforedescribed manner.

A conventional method of preparing blown film utilizing an "A" frame and nip roll provides for cooling of the extruded, blown film using an annular water bath which surrounds the film bubble and cools it. This technique can be modified by cooling the inner die outlet lip either by water cooling the face or by using a water cooled mandrel in extruding the blown film and cooling the mandrel.

Similarly a slit die may be used to prepare coated film. If only the upper or lower die outlet lip is cooled a film comprising two layers, the plastic layer and an elastomer or second plastic layer is formed. Where both die lips are cooled, a sandwich is prepared with outer skins of plastic polymer and an inner core of elastomer or second plastic polymer.

In another embodiment of the invention, a second plastic polymer may be compounded with chemical blowing agents. Alternatively, a pneumatogen e.g., Freon, may be injected into the extruder melt. The resulting product has a foamed core between two plastic polymer skins.

In another embodiment an elastomer is blended with tackifier resins, e.g., terpene resins to form a pressure sensitive or melt adhesive. Only one die outlet lip is cooled. The resulting product is an adhesive coated film of plastic polymer useful as wall or shelf coverings.

Where the elastomer/plastic polymer composition has the formulation shown in Table I a sandwich can be prepared having a heat sealable plastic skin and a flexible elastomer core. The product is useful for flexible packaging operations, e.g., medical solution bags.

In addition to the plastics described above, other polymers, e.g., thermoplastic polyesters, ionically crosslinked polymers, PVC, etc. can be utilized to prepare the coated films of this invention. The ionically crosslinked polymers included sulfonated EPDM and carboxylic acid copolymers of ethylene or carboxylic acid copolymers of styrene.

CLAIMS

1. A free flowing pellet composition comprising:

(a) a body portion comprising a blend of an elastomer having a glass transition temperature (Tg) of less than 0°C and at least one plastic polymer having a semicrystalline or crystalline melting point at least 10°C higher than the softening point of the elastomer, said plastic polymer and elastomer being insoluble in one another in the melt state;

(b) a skin portion surrounding said body portion, said skin portion being comprised substantially of said plastic polymer.

2. A pellet according to Claim 1 wherein the plastic polymer comprises from 15 to 90 weight percent of the composition based on the overall composition of the pellet.

3. A pellet according to Claim 2 wherein the plastic polymer comprises from 15 to 35 weight percent of the composition.

4. A pellet according to Claim 3 wherein the plastic polymer comprises about 25 weight percent of the composition.

5. A pellet according to any one of Claims 1 - 4 wherein the elastomer comprises EPR, EPDM, NR, SBR, PIB, butyl rubber or halogenated butyl rubber.

6. A pellet according to any one of Claims 1 - 5 wherein the plastic polymer comprises HDPE, LDPE, LLDPE, polypropylene, polybutene-1, crystalline copolymers of ethylene and an alpha-olefin or mixtures thereof.

7. A pellet according to any one of Claims 1 - 6 wherein the elastomer is EPR or EPDM and the plastic polymer is a mixture of polypropylene and a crystalline ethylene/propylene copolymer.

8. A process for preparing a free flowing polymer pellet which comprises:

(a) intimately mixing an elastomeric polymer having a glass transition temperature (Tg) of less than 0°C with a plastic polymer having a semicrystalline or crystalline melting point of at least 10°C higher than the softening point of the elastomer; said plastic polymer and elastomeric polymer being insoluble in one another in the melt state;

(b) extruding the elastomer/plastic polymer mixture at an extrusion melt temperature above the melting point of the plastic, through a die having a die inlet and a die face, said die face being the die outlet; maintaining a temperature gradient across the die from the die inlet to the die outlet, said temperature gradient being such that the polymer mixture has a melt temperature at the die outlet which is less than the extrusion melt temperature; and

(c) forming pellets of the extrudate; thereby forming a pellet having a skin comprising the plastic polymer.

9. The process according to Claim 8 wherein the die face is maintained at a temperature at least 10°C below the melting point of the plastic, thereby creating a temperature gradient across the die.

10.. The process according to Claim 8 or 9 wherein the die face temperature is maintained by immersing the die face in water and pelletizing the extrudate as it exits the die face.

11. The process according to Claim 8, 9 or 10 wherein the plastic polymer comprises from 15 to 90 weight percent of the elastomer/plastic composition.

12. The process according to Claim 11 wherein the plastic polymer comprises from 15 to 35 weight percent of the elastomer/plastic polymer.

13.. The process according to any one of Claims 8 - 12 wherein the plastic polymer is LDPE, HDPE, LLDPE, polypropylene, poly-butene-1, a crystalline copolymer of ethylene and alpha-olefin or mixtures thereof.

14. The process according to any one of Claims 8 - 13 wherein the elastomer is EPR, EPDM, NR, PIB, butyl rubber, halobutyl rubber, SBR, or mixtures thereof.

15. The process according to any one of Claims 8 - 14 wherein the elastomer is EPR or EPDM and the plastic polymer is polypropylene, a crystalline ethylene propylene copolymer, HDPE or mixtures thereof.

16. A process for preparing a composite film comprising at least one layer of a first plastic polymer and a substrate of a second polymer/first plastic polymer composition wherein the plastic polymer has a semicrystalline or crystalline melting point which is at least $10^{\circ}$C higher than the second polymer softening or melting point, said first plastic polymer comprising from 15 to 90 weight percent of the second polymer/first plastic polymer composition said second polymer and plastic polymer being insoluble in one another, which comprises:

(a) intimately mixing the second polymer and first plastic polymer;

0169654

(b)     extruding the mixture through a film die having a die outlet comprising a first die surface and a second die surface;

(c)     cooling at least one surface of the die outlet to a temperature at least 10°C below the melting point of the plastic polymer; and

(d)     cooling the film so formed.

17.     The process according to Claim 16 wherein the first plastic polymer comprises from 15 to 60 weight percent of the second polymer/first plastic polymer mixture.

18.     The process according to Claim 16 or 17 wherein the second polymer is an elastomeric polymer having a Tg of less than 0°C.

19.     The process according to Claim 18 wherein the elastomer is EPR, EPDM, NR, SBR, PIB, butyl rubber or halobutyl rubber, or mixtures thereof and the plastic polymer is HDPE, LDPE, LLDPE, polypropylene, polybutene-1, a crystalline copolymer of ethylene and an alpha-olefin or mixtures thereof.

20.     The process according to Claim 19 wherein the elastomer is EPR or EPDM and the plastic polymer is a crystalline ethylene-propylene copolymer, HDPE or mixtures thereof.

21.     The process according to Claim 18, 19 or 20 wherein the elastomer is combined with tackifier resins thereby forming an elastomeric pressure-sensitive adhesive composition.

22.     The process according to any one of Claims 16 - 21 wherein the die is a blown film die having an annular outlet bounded by an inner and outer die lip, only said inner lip being cooled.

23.     The process according to any one of Claims 16 - 22 in which the first plastic polymer comprises HDPE and crystalline ethylene/ propylene copolymer, and the second polymer is an elastomer, wherein the elastomer/plastic composition comprises 40 wt. % elastomer based on the elastomer/plastic composition, the HDPE comprises about 16 weight percent of the elastomer/plastic composition and the crystalline ethylene/ propylene copolymer comprises about 44 wt. % of the elastomer/ plastic composition.

- 16 -

0169654

24.    The process according to any one of Claims 16 - 23 wherein both the first and second die surface are cooled.

25.    Adhesive film or flexible packaging materials when produced by the process according to any of claims 16 - 24.

Figure 1A- Scaning Electron Microscope (SEM)
micrograph of strand-cut pellet sections
microtomed at liquid nitogen temperatures.

Figure 1B- Scaning Electron Microscope (SEM)
micrograph of under-water pellet sections
microtomed at liquid nitogen temperatures.

Figure 2A- SEM of surface of strand-cut pellet
section microtomed at liquid nitogen temperatures
showing rubber extracted from the surface.

Figure 2B-  SEM of surface of under-water
pelletized pellet section microtomed at
liquid nitogen temperatures showing con-
tinuous thermoplastic skin with no rub-
ber extracted.